# EUROPEAN PATENT APPLICATION

(11) **EP 2 442 070 A1**
(43) Date of publication of application: **18.04.2012**
(21) Application number: 10187321.4
(22) Date of filing: 12.10.2010
(51) Int. Cl.: G01C 1/02, G01C 3/02, G01C 15/00, G12B 17/00, F16M 11/02

(54) **Arrangement for levelling out environmental conditions around a levelling support of a geodetic instrument**

(71) Applicant: SP Sveriges Tekniska Forskningsinstitut AB, 501 15 Boras (SE)
(72) Inventor: Bergstrand, Sten, SE-427 38, Billdal (SE)
(74) Representative: Fritsche, Daniel

(57) **Abstract**

The present invention relates to an environmental equalising arrangement for a support arrangement (3), which support arrangement (3) in use is adapted to support a registration device (4) and to provide an alignment opportunity for said registration device (4) in relation to a horizon. Said environmental equalising arrangement is provided with an environmental equalising feature such that an environmental condition within said support arrangement (3) in use is generally levelled out.

## Description

### Field of the Invention

The present invention relates to an environmental equalising arrangement for a support arrangement, which support arrangement in use is adapted to support a registration device and to provide an alignment opportunity for said registration device in relation to a horizon.

### Background of the Invention

Within geodetic measuring or surveying the terrestrial or three-dimensional position of points and the distances and angles between them are accurately determined in relation to a coordinate system. A device used within the surveying is a total station, which is a theodolite with an electronic distance measurement device. Although it is possible to measure to virtually any target, accurate measurements require designated retroreflectors or prisms.

Since their introduction, total stations have made the technological shift from being manually operated optical-mechanical devices to being at least partially electronically operated. During the development of the total stations, and other measurement devices, there has also been a desire for increasing the angular resolution of the measurements for decreasing error ranges.

Today, robotic total stations are widely used. A robotic total station is in principle a remote-controlled total station. One person may both control the total station remotely and hold the reflector. Further, a robotic total station may be controlled by computer programs, which allow continuous monitoring over a long measurement period for monitoring small target movements.

However, it has turned out that the time series resulting from such continuous monitoring may be difficult to interpret. Especially, the resulting data comprise time dependent parts having an unknown origin. Further, repeated measurements discerning variations of an object's position during a relatively long time period has revealed seemingly systematic variations that exceed the angular resolution of the total stations which current error mitigation techniques (e.g. two face measurements and forward resections) do not address. Therefore, it is desirable to take care of such data for further refining of the accuracy of the total stations in particular, and measurement or registration devices in general.

Hence, there is a need for improved total station set-ups or other measurement or registration device set-ups, and more specifically of the type that overcomes or at least alleviates the prior art problems of total stations.

### Summary of the Invention

In view of the above-mentioned and other drawbacks of the prior art, a general objective of the present invention is to alleviate said drawbacks.

According to an aspect of the present invention an environmental equalising arrangement for a support arrangement is provided, which support arrangement in use is adapted to support a registration device and to provide an alignment opportunity for said registration device in relation to a horizon. Said environmental equalising arrangement is provided with an environmental equalising feature such that an environmental condition within said support arrangement in use is generally levelled out.

The invention is based on the insight that the support arrangement in use is subjected to external time dependent influences resulting in an undesired displacement of an upper surface of said support arrangement in relation to a lower surface thereof, which lower surface has a fixed and possibly known relationship to a ground. The support arrangement forms a first surface (*i.e.* said lower surface) having a known position in relation to said ground, and a second surface (*i.e.* said upper surface) adapted to support said registration device. Said first and second surfaces have an asserted fixed relationship. Said support arrangement is in use subjected to external time dependent influence resulting in an undesired displacement of said second surface in relation to said first surface.

The external time dependent influence may be differential radiation from the sun, temperature differences at different parts of the support arrangement due to winds, winds resulting in bending of the support arrangement or other similar occurrences. The occurrences are such that they are present no matter what. The occurrences result in *i.a.* bending of the support arrangement or of temperature induced material expansion or contraction thereof, such that the location of the second surface in relation to the known first surface becomes undefined and varies over time. The result of such a dislocation of the second surface in relation to the first surface is that the registration device gives an indication that an observation origin has moved although this is not the case.

The environmental condition may be temperature, humidity, pressure etc.

When using the environmental equalising arrangement according to the invention the environmental equalising feature is generally utilised to level out the external time dependent influence so that the support arrangement may function properly.

In an exemplary embodiment, said environmental condition is kept generally constant. Not only does the external time dependent influence vary in use locally on different parts of the support arrangement due to *i.a.* solar radiation, but also on a more general level as e.g. mean temperature over a 24-hour period. The more equal the environmental condition is kept, the better measurements may be achieved by the registration device, *i.a.* the less the error occurring.

In an exemplary embodiment, said environmental equalising arrangement is a cover which in use is adapted to encapsulate said environmental equalising arrangement. By applying a cover to the support arrangement the environment within the cover may be better controlled.

In an exemplary embodiment, said cover is a flexible gaiter having a form which is complementary to said support arrangement.

In an exemplary embodiment, said cover is a hard shell cover having a form which is complementary to said support arrangement.

In an exemplary embodiment, said environmental equalising feature is heat insulation lined within said cover.

In an exemplary embodiment, said environmental equalising feature is an air-conditioning device, said air-conditioning device comprising any one or several of the following devices: a fan, a temperature regulation device humidity regulation device. Some registration devices are provided with its own internal air-conditioning device, and this one may as an alternative be used also to provide air-conditioning to the support arrangement.

In an exemplary embodiment, said cover comprises aerating holes.

In an exemplary embodiment, said environmental equalising feature is a heating conduit embedded within a material of said environmental equalising arrangement. This way the support arrangement is not covered up and the opportunity to align the support arrangement to the horizon is not intervened with.

In an exemplary embodiment, said heating conduit is an electrical resistance wire. Electricity is often present, if not in form of an external power supply system, then e.g. as a battery for energizing the registration device. Electricity is an advantageous way of transporting energy directly to the location where it is needed.

In an exemplary embodiment, said support arrangement is a tribrach.

In an exemplary embodiment, said registration device is a total station. Such total stations are often provided with an internal compensation system which is said to handle misalignments of a vertical axis of the total station in relation to a local plumb line and also of the line of observation in relation to the horizon. However, as will be described later this is not fully the case, and by using the environmental equalising arrangement according to the invention such measurement errors may be greatly reduced.

### Brief Description of the Drawings

The various aspects of the invention, including its particular features and advantages, will be readily understood from the following detailed description and the accompanying drawings, in which:
Fig. 1a is a schematic illustration of a prior art support arrangement and a registration device in form of a total station together with a reflector;
Fig. 1b is an illustration of a prior art support arrangement;
Fig. 2 is a schematic illustration of a prior art compensation system that mitigates inclination misalignments or, equivalently, rotations around the x-and y- axes,
Fig. 3a and 3b are plots of measurement data for angular read-outs by the total station arranged on a prior art support arrangement;
Fig. 4a and 4b are plots of measurement data for temperature variations in the support elements of the support arrangement and corresponding incoming solar radiation flux density corresponding to the data in Fig. 3a and 3b;
Fig. 5 is a plot of measurement data for temperature variations at each support element;
Fig. 6 is a schematic illustration of an exemplary displacement of a reference point of the total station due to a displacement of the second surface of the support arrangement relative the first surface of the support arrangement, and the resulting difference for the relation of the registration device and a set of targets;
Fig. 7 illustrates schematically a displacement of a total station and its reference point due to a displacement of the second surface of the support arrangement relative the first surface of the support arrangement;
Fig. 8 is a cross sectional view of an embodiment of an environmental equalising arrangement in use, arranged on a tribrach 3 and a support 2;
Fig. 9 is a cross sectional view of an alternative embodiment of environmental equalising arrangement in use, arranged on a tribrach 3 and a support 2; and
Fig. 10 is a cross sectional view of still an alternative embodiment of environmental equalising arrangement in use, arranged on a tribrach 3 and a support 2.

### Detailed Description of Exemplary Embodiments

Throughout the whole description words as upper, lower, above, and below are intended to have their ordinary meaning when the support arrangement is arranged on a substantially horizontal support. Any reference to a local or general coordinate system generally refers to a right-handed Cartesian coordinate system, in which the x- and y-axes lie in the horizontal plane and the z-axis lies in the vertical plane. Other coordinate systems may be used without deviating from the intention of the present inventive concept.

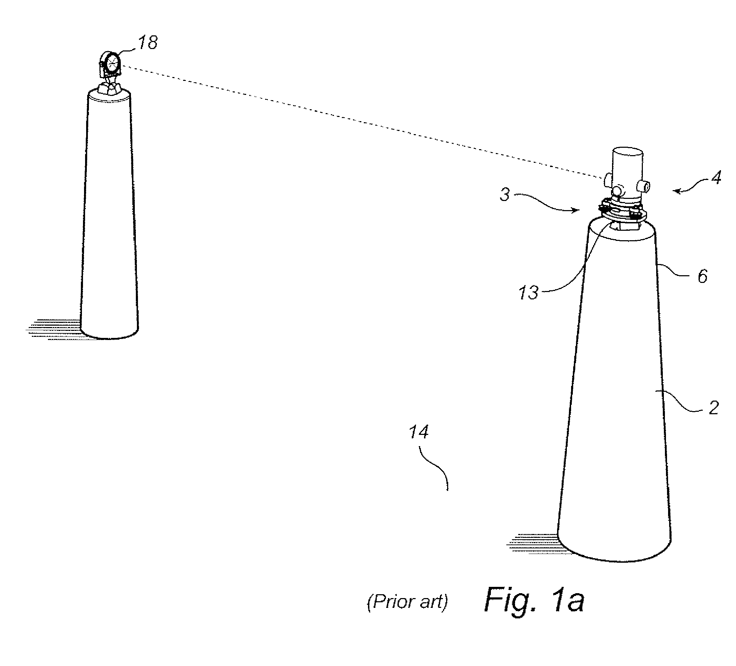

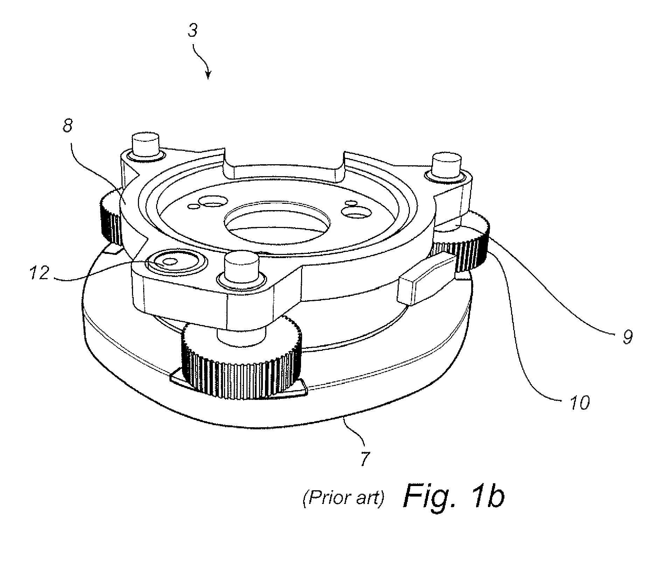

Fig. 1 schematically illustrates a prior art support arrangement and a registration device. The support arrangement 3 is in form of a tribrach, which is arranged on a support 2. A registration device 4 in form of a total station is arranged on the tribrach 3.

The support 2 is in form of a concrete pillar and comprises an upper portion 6 comprising a tribrach supporting area 13.

The tribrach 3 comprises a first surface 7 in form of a lower base plate and a second surface 8 in form of an upper plate, located vertically above the base plate. Both the base plate 7 and the upper plate 8 are substantially triangular. The upper plate 8 is arranged to the base plate 7 by three support elements 9 adjacent to each corner of each plate 7, 8. In the embodiment in figure 1, the support elements 9 are in form of thread studs and matching foot screws 10, arranged on each of the thread studs 9 for allowing movements of the upper plate 8 in relation to the base plate 7. By turning the foot screws 10 differently the upper plate 8 can be tilted in relation to the base plate 7. The base plate 7 is adapted to be arranged on the upper portion 6 of the support 2. The upper plate 8 is adapted to receive a registration device 4, such as a total station 4. The upper plate 8 of the tribrach 3 comprises three supporting pins (not shown) and a circular level 12. The supporting pins are adapted to receive corresponding features at the bottom of the registration device 4 such that the position of the registration device 4 in relation to the tribrach 3 is well defined and generally invariant.

Before a measurement the tribrach supporting area 13 of the upper portion 6 of the support 2 is arranged roughly horizontally. Thereafter the tribrach 3 is arranged to the support 2 such that an underside of the base plate 7 lies against the tribrach supporting area 13 of the upper portion 6 of the support 2. In use, the second surface 8 of the upper plate 8 should be horizontal for achieving a levelled horizon for the total station 4, since it ensures that the vertical axis of the registration device 4 is normal to a horizontal plane. Therefore, the upper plate 8 is levelled substantially horizontally using the foot screws 10 such that a bubble of a circular level 12 on the tribrach 3 is centred within a circle of the circular level 12. Such manual horizontal alignment is however always beset with a certain degree of misalignment.

Prior a measurement, the height between the tribrach 3 and a reference point on a ground 14 may be measured using a measuring tape or similar measurement tool. By entering the height into the total station 4, the height is used by the total station 4 during the measurements for correcting for angular errors due to the height difference between the known reference point on the ground 14 and the total station 4. Alternatively, the measurements of the total station 4 may be in relation to a temporary local coordinate system, for instance using three fixed reflectors.

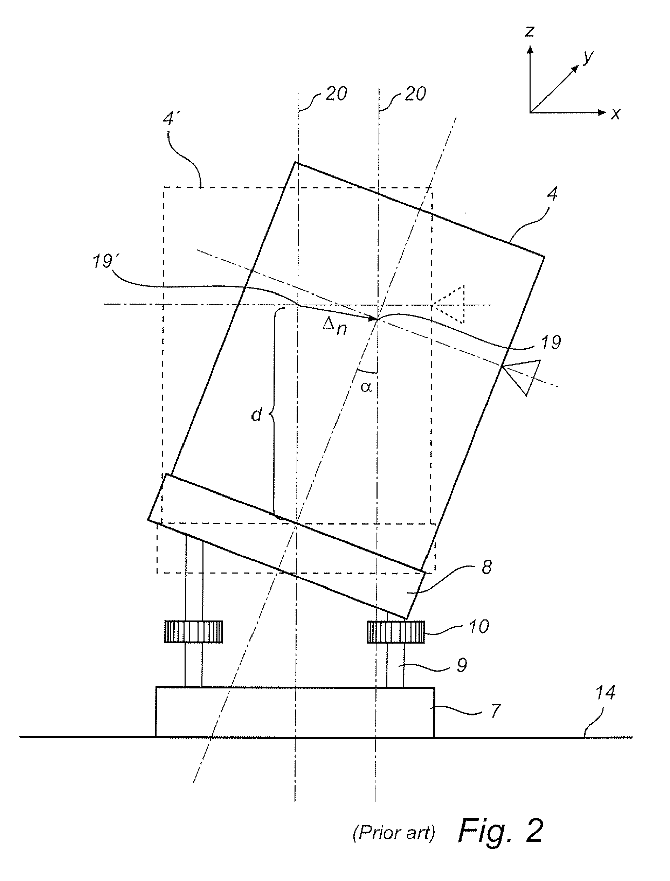

Generally, prior art total stations 4 relate an observation origin to an intersection of a vertical axis of the total station 4 and a line of observation through a registration eye of the total station 4, denoted as a reference point 19 in figure 2. The vertical axis of the total station 4 should under perfect conditions be aligned with a local plumb line 20 and the line of observation should be aligned with the horizon. Due to e.g. imperfections in the manual horizontal alignment of the upper plate 8 in relation to the horizon, tilt or subsidence of the support 2, or vibrations in the ground resulting in imperfections in horizontal alignment of the total station 4, the vertical axis of the total station 4 may be misaligned by an angle α (having components in the xz-plane and in the yz-plane) in relation to a local plumb line 20, resulting in an inclination error.

Such imperfections are in the following referred to by the generic term "inclination misalignments".

Such misalignment of the vertical axis in relation to the local plumb line 20 results in that the reference point 19 of the total station 4 is dislocated in relation to an intended position in the xz-plane and in the yz-plane. Such a dislocation is denoted with Δₙ in this application. Generally, prior art total stations 4 comprise a prior art internal compensation system for compensation of values measured by the total station 4 for such angular misalignments resulting in such dislocations Δₙ of the reference point 19. Such a misalignment and the prior art compensation method are illustrated in figure 2. Figure 2 illustrates an initial inclination error of the total station 4 due to imperfections in the manual horizontal alignment of the upper plate 8 in relation to the horizontal plane. The total station 4 is inclined by an angle α (here in the xz-plane) in relation to a perfectly aligned position indicated with a total station 4' drawn with dashed lines. The inclination error α in relation to the local plumb line 20 of the total station 4 results in the dislocation Δₙ of the reference point 19. The prior art compensation system computationally adjusts the misaligned vertical axis to the local plumb line 20 by means of mathematical rotations round x- and y-axes. Thus, the prior art internal compensation system may compensate for the angle α using basic trigonometric functions when the angle of misalignment, α, of the vertical axis in relation to the local plumb line 20 is known. Hence, a value measured by the prior art total station 4 may be compensated for the angle α. It should be noted however that this prior art compensation system only compensates for misalignments of the total station 4 in relation to the horizon, i.e. for inclinations of the base of the total station 4 in relation to the x- and y-axes.

It is clearly visible from figure 2 that when the prior art internal compensation system has mathematically compensated for the misalignment α in relation to the local plumb line 20, the reference point 19 of the total station 4 also has been translated in the x- and z-directions (and may be also in the y-direction).

Suitably, the total station 4 is a robotic total station. Hence, the total station may be used for continuous monitoring over a long measurement period for monitoring relatively small movements of a target 18.

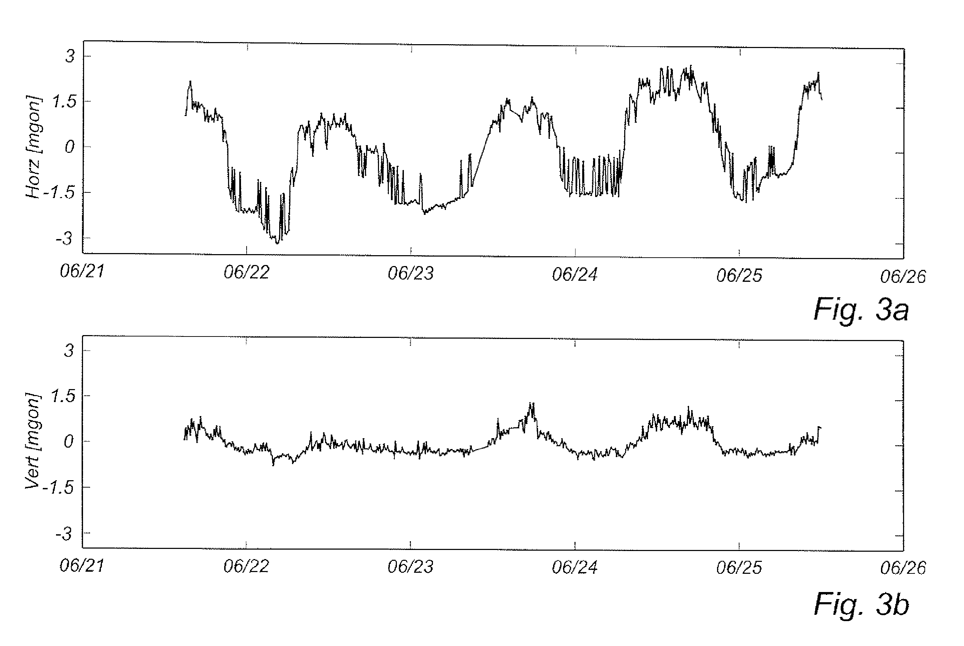

Generally, the base plate 7 and the upper plate 8 have been supposed to have a fixed relationship during a measurement period. However, during repeated measurements over longer periods of times discerning the variations of an object's position using prior art tribrachs 3 arranged on a fixed support 2 for instance in form of a concrete pillar casted fixedly to a rock 14, systematic unexpected variations that exceeds the angular resolution of a conventional prior art total station 4 have been found. Such fixed supports 2 are generally advantageous since they allow the base plate 7 of the tribrach 3 to be firmly fastened. Thus, the risk of movements of the support 2 for the tribrach 3 is reduced. Figures 3a and 3b illustrates plots of measurement data for angular read-outs by a prior art total station 4 arranged on a prior art tribrach 3. The data span four consecutive calendar days and the position of the target relative to the total station 4 should have been invariant during the measurement period. Figure 3a however illustrates horizontal angular read-out variations of the target position and figure 3b illustrates vertical angular read-out variations of the target position. The measurement data in figures 3a and 3b are collected using forward resections in two faces and compensated using the prior art internal compensation system of prior art total stations 4. It is evident that there are periodical angular variations in horizontal direction in spite of the fact that the object's actual position has not been willingly or knowingly changed horizontally. In addition, there are variations in vertical direction in spite of the fact that the actual object's position has not been willingly or knowingly changed vertically.

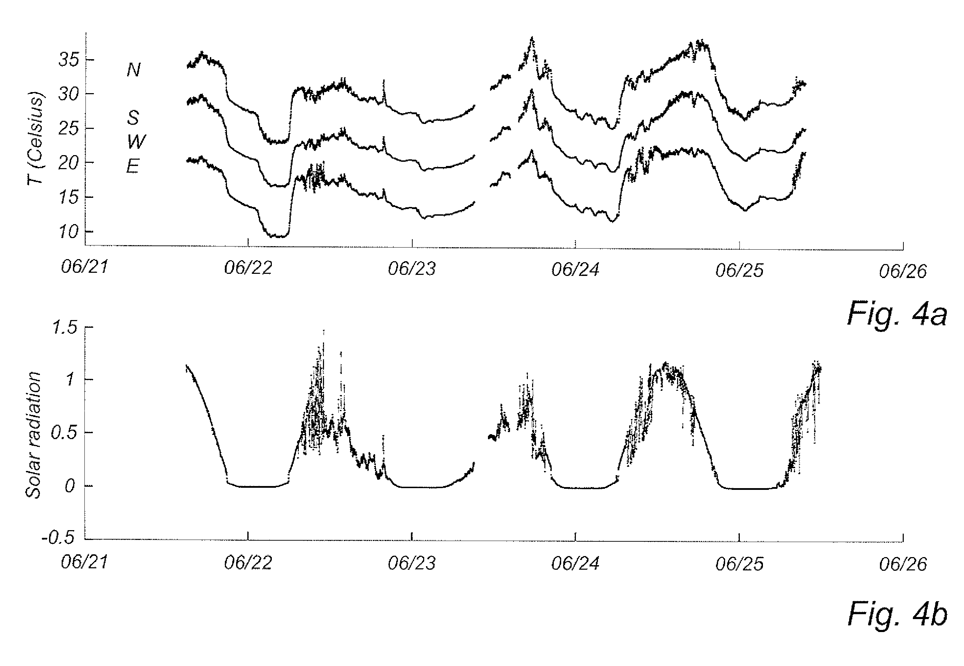

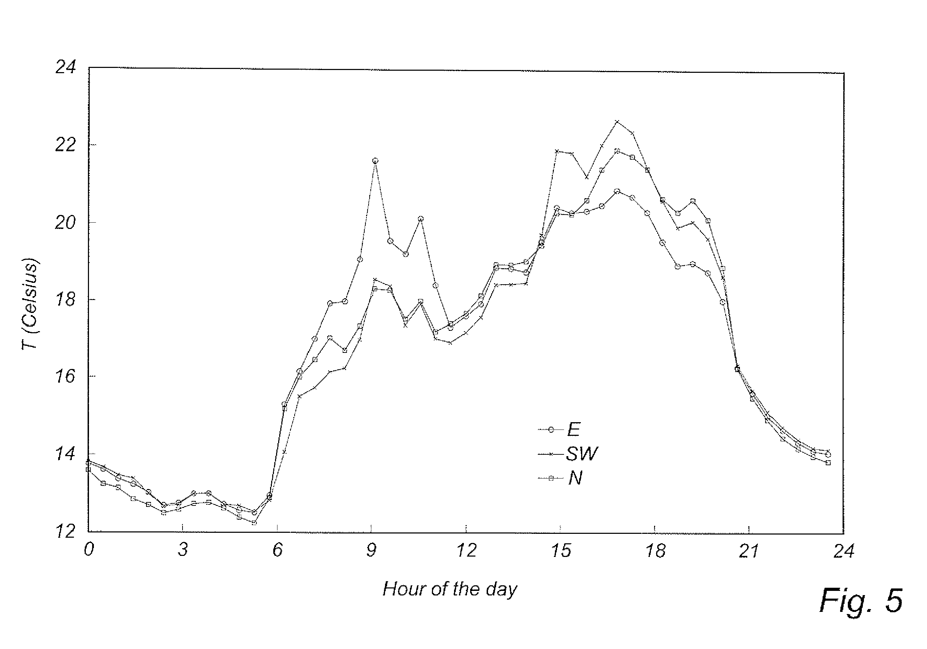

The inventors have analysed the data and they have realised that the tribrach 3 is subjected to external time dependent influence, such as sunshine, rain, wind, ice formation etc. Such external influence results at least in differential heating or cooling of at least one of the components of the tribrach 3, for instance by radiation or convection. Figures 4a and 4b illustrates plots of measurement data for temperature variations in the support elements 9 of the tribrach 3 and incoming solar radiation flux density. The plot comprises data for a temperature sensor at each thread stud 9. For illustration purposes, the data for the thread stud at north (indicated with an N in the figure) comprise an offset of 14 degrees Celsius and the data for the thread stud at South comprise an offset of 7 degrees Celsius. The data span four consecutive calendar days and correspond to the data in figures 3a and 3b. From figure 4a it is evident that the temperature in the support elements 9 differs periodically between day and night. The temperature variations correspond to the periodical angular variations in figures 3a and 3b. The influence on each support element 9 is illustrated in figure 5, which is a plot of measurement data for temperature variations at each support element 9. The data at each measurement point is an average over data at the same time during four consecutive days. From figure 5 it appears that a temperature at a support element 9 positioned towards east (circles) is warmest in the morning, the south-western support element 9 (crosses) is warmest in the afternoon and the northern support element 9 (squares) is warmest in the evening.

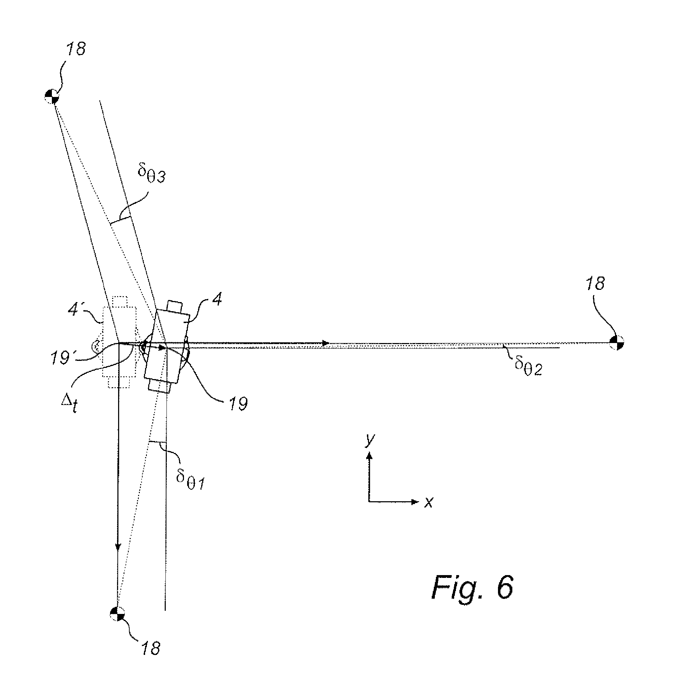

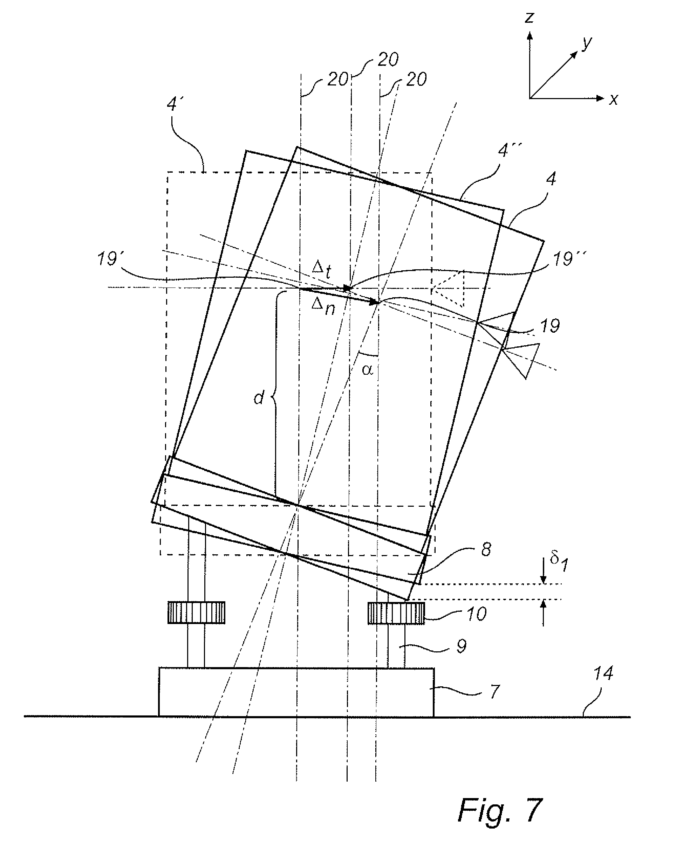

The time dependent external influence results in material influences in form of expansion or contraction of any one or all of the base plate 7, the upper plate 8, and the thread studs 9. A suitable unit for the expansion or contraction is µm mm⁻¹ °C⁻¹. The expansion or contraction may be due to a temperature variation or some other effect, such as absorption of liquid or drying, if the material of the tribrach 3 is such that absorption or drying is possible. Such expansion or contraction causes an undesired displacement, Δₚ, in form of a translation and/or an inclination of the second surface 8 of the upper plate 8 in relation to the first surface 7 of the base plate 7. Naturally, the displacement, Δₚ, may be a combination of translations and/or rotations. A displacement Δₚ of the second surface 8 in relation to the first surface 7 results in an additional displacement of the total station 4, which results in erroneous angle readings of the total station 4, in spite of the prior art internal compensation system, and gives rise to imaginary object movement observations. That is, such a displacement, Δₚ, of the upper plate 8 due to time dependent external influence results in that the relation between a reference point 19 of the total station 4 and the reflector 18 is changed with a displacement Δₑ of the reference point 19 of the total station 4. However, a total displacement Δₜ of the reference point 19 of the total station 4 is a combination of the displacement, Δₙ, due to misalignments in relation to the horizon (rotations around the x- and y-axes, *i.a.* inclination misalignments as discussed above) of the total station 4, and the displacement Δₑ deriving from the displacement Δₚ of the upper plate 8 in relation to the base plate 7 due to time dependent external influence. Such a displacement Δₜ is illustrated in figure 6 from above and schematically in figure 7. In figure 6 an at least translational displacement Δₜ of the reference point 19 of the total station is illustrated in relation to a set of targets 18. An assumed position of the total station is indicated by the total station 4', which is drawn with dashed lines. The angular displacements of the reference point 19 of the total station 4 in the horizontal plane in relation to the targets 18 are denoted with δ_{α1}, δ_{α2}, and δ_{α3}.

Figure 7 is a highly schematical, two-dimensional illustration of a total displacement of a total station 4" due to time dependent external influences and inclination misalignments as discussed above. The total station 4 is initially inclined in relation to a perfectly aligned position indicated with a total station 4' drawn with dashed lines. The inclination error α in relation to the local plumb line 20 of the total station 4 results in the displacement Δₙ of the reference point 19. The reference point 19" of the displaced total station 4" is illustrated. Material effects due to the time dependent external influences are illustrated with one thread stud 9, which is expanded with a length δ₁ substantially in a direction which is normal to the surface of the base plate 7 and the upper surface of the support 2 of the base plate. In the situation illustrated in figure 7 it is obvious that the total displacement Δₜ of the reference point 19" of the total station 4" is a combination of the displacement Δₙ due to inclination misalignments of the total station and the displacement Δₑ due to time dependent external influence. In addition to being initially inclined the total station 4 may be inclined depending on other reasons than initial inclination errors during the measurement period as discussed above. If the upper plate 8 as well as the lower surface 7 initially are exactly parallel and in addition perfectly aligned with the horizon, and the average temperature remains constant, the total displacement Δₜ is merely a result of the displacement of a total station 4" due to time dependent external influence, e.g. solar heating.

The displacements in the figures 6-7 are exaggerated for illustrative purposes. Thus, without knowing better, when analysing data from measurements by a prior art total station 4 and prior art tribrach 3 during which such displacements have occurred it seems like a target 18, in form of the reflector has moved, but in reality it is the reference point 19 of the total station 4 that has moved. The total displacement may be divided into translational and rotational contributions, δₓₓ, δ_{xy}, δ_{xz} etc. (in total six contributions) along and/or round axes in a Cartesian coordinate system. Generally, the displacement Δₑ of the reference point 19 of the total station 4 due to time dependent external influences resulting from a displacement of the upper plate 8 in relation to the base plate 7 may be a translation in an arbitrary direction and/or an inclination.

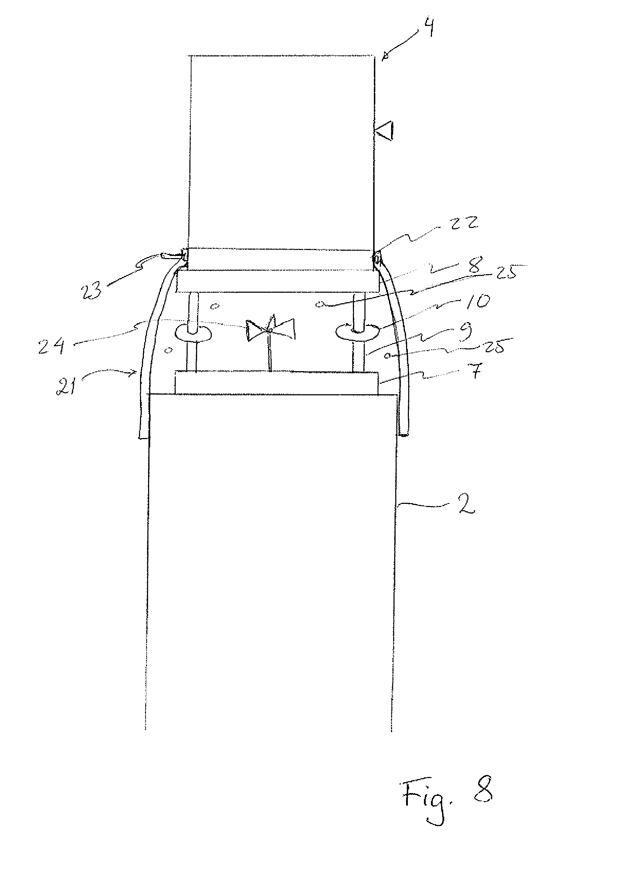

An embodiment of an environmental equalising arrangement according to the invention, illustrated in figure 8, comprises a cylindrical cover 21 that in use encloses the tribrach 3. The cover 21 in figure 8 is an example of a flexible gaiter according to the claims. The cover need not being cylindrical. The cover 21 is suitably formed of an impermeable flexible material, for instance of rubber or a rubbery material. The cover 21 has a form which is complementary to the tribrach 3 and is suitably formed as a truncated cone or as a bell such that a periphery of the tribrach 3 may be covered by the cover 21. One of the openings of the cylindrical cover 21 is adapted to be arranged surrounding a periphery of a base plate 22 of a total station 4, allowing the total station 4 to be attached to the tribrach 3. The upper end of the cover 21 comprises a tightening device for tightening the upper opening around the base plate 22 of the total station 4, such that the cover is tightly surrounding the base plate 22 of the total station 4. The tightening device 23 may be in form of an elastic band, a hose band, a drawstring, utilisation of the inherent elasticity of the material and/or of the flexibility of the design, or the like. The other opening of the cover 21, that is the periphery of the lower end of the cover 21, may surround a periphery of the support 2 tightly. The lower end of the cover 21 is dimensioned such that the lower periphery is slightly smaller than a periphery of the support 2. Thus, once the cover 21 is arranged around the support 2 it fits tightly. The length of the portion of the cover 21 extending over the support 2 is such that a tight seal between the support 2 and the cover 21 is ensured. Alternatively, the lower end may comprise a tightening device 23 in form of an elastic band, a drawstring, or the like. Further, the invention comprises an air-conditioning device (not shown). The air-conditioning device comprises a fan 24 and a temperature regulation device. The fan 24 is used for stirring the air within the cover 21 and the temperature regulation device (not shown) is used for regulating the temperature of the air within the cover 21. This is done in order to level out the conditions around the tribrach 3 in order to minimize any measurement errors due to differential heating and distortion of the tribrach 3 and/or mean temperature variation of the ambient air having a similar result. For improving the effect of the air-conditioning device, the cover 21 comprises relatively small aerating holes 25, such that the air circulation within the cover 21 may be controlled better resulting in that the temperature within the cover 21 may be equalized more effectively.

In use, the tribrach 3 is arranged at the support 2 and the second surface 8 of the upper plate 8 of the tribrach 3 is manually aligned horizontally in relation to a horizontal plane. Thereafter, the cover 21 is arranged onto the tribrach 3, such that the cover 21 surrounds the tribrach 3. When the total station 4 is arranged to the tribrach 3 the upper tightening device 23 is tightened. Thus, by controlling the air-conditioning device, a temperature of air enclosed within the cover 21 in the space between the lower and the upper plates 7, 8 of the tribrach 3 may be kept generally constant independent of the ambient temperature. By stirring the air using the fan 24 the temperature of the air is equalized and thus, the thread studs 9 and the plates 7, 8 will not be affected differently due to time dependent external influence. When the temperature of the air within the cover 21 is lower than or higher than a desired value, the temperature regulating device will begin heating or cooling the air within the cover 21 using a heater device or a cooler device. Also, if it is desired or required, the temperature of the air may be additionally heated or cooled, depending on the ambient conditions. Generally, the temperature interval in which a total station 4 will work properly is from -30 to +50 °C. Hence, it is desirable to be able to use the tribrach 3 within this interval, without significant measurement errors. For instance, in warm geographical areas, such as equatorial areas, it may be desirable and/or advantageous to cool the air enclosed within cover 21. On the contrary, in cold areas, such as polar areas, it may be desirable and/or advantageous to heat the air enclosed within the cover 21. Thus, the cover 21 according to the invention will reduce the temperature effects on the components of the tribrach 3, such that measurement errors are decreased. It may according to an embodiment of the invention be desirable to produce one environmental equalising arrangement specifically adapted to certain ambient conditions, such as for a warm climate or a humid climate.

Suitably, the cover 21 may be lined with heat insulating material 29 or may be made of heat insulating material.

In one embodiment, the cover 21 is formed of a piece of cloth. In such a case the cover 21 is formed similarly as is described above and comprises a tightening device 23 both at the upper opening and at the lower opening.

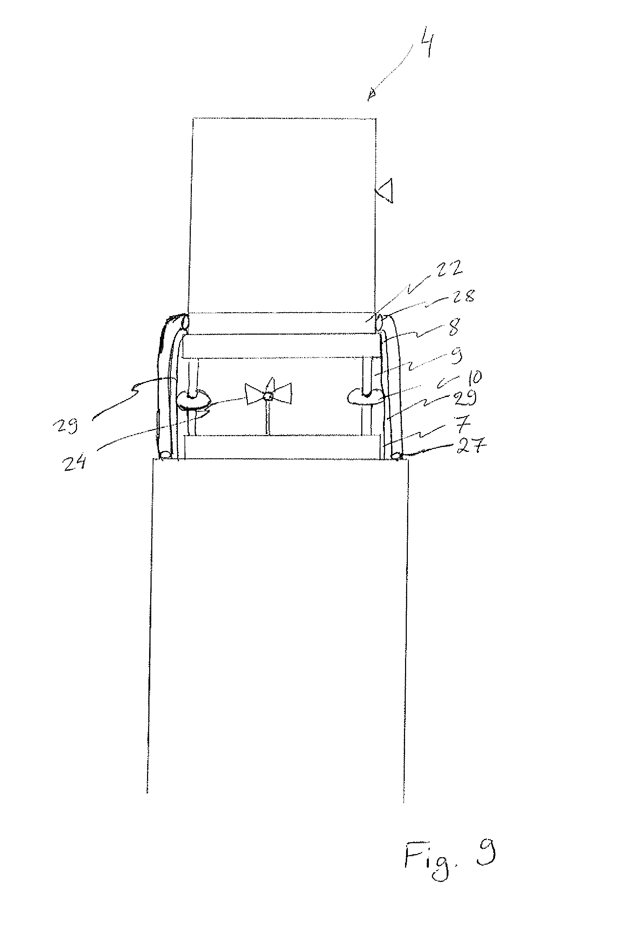

In an alternative embodiment, illustrated in figure 9, the cover 26 is a hard shell cover 26 moulded in one piece. Figure 9 is a cross sectional view of such a hard shell cover 26 in use, arranged on a tribrach 3 and a support 2. The periphery of the cover 26 is slightly smaller than the periphery of the support 2 and a sealing 27 is arranged at the periphery of the lower opening of the cover 26. Advantageously, the sealing is formed such that the lower opening of cover 26 is provided with a suction cup effect. Thus, the cover 26 may seal tightly against the support 2. The upper end of the cover 26 is dimensioned to fit tightly around a periphery of a base plate 22 of a total station. Suitably a sealing 28 is arranged round a periphery of the cover 26 that in use will abut the base plate 22 of the total station 4. The cover 26 in figure 9 is lined with heat insulating material 29. In other aspects the cover 26 is similar to the cover 21 in figure 8. The function of the cover 26 in use is similar to the function of the cover 21.

Alternatively, the cover 26 may be moulded in several pieces and the pieces may be joined to a cover 26. In such a case, depending on environmental conditions, it may be necessary to insulate the joints between two adjacent pieces.

Suitably, instead of being lined with heat insulating material 29, the cover 26 may be made of heat insulating material.

In an alternative embodiment, the aerating holes 25 of the cover 26 are omitted. Such an embodiment may be advantageous in cold and/or humid regions.

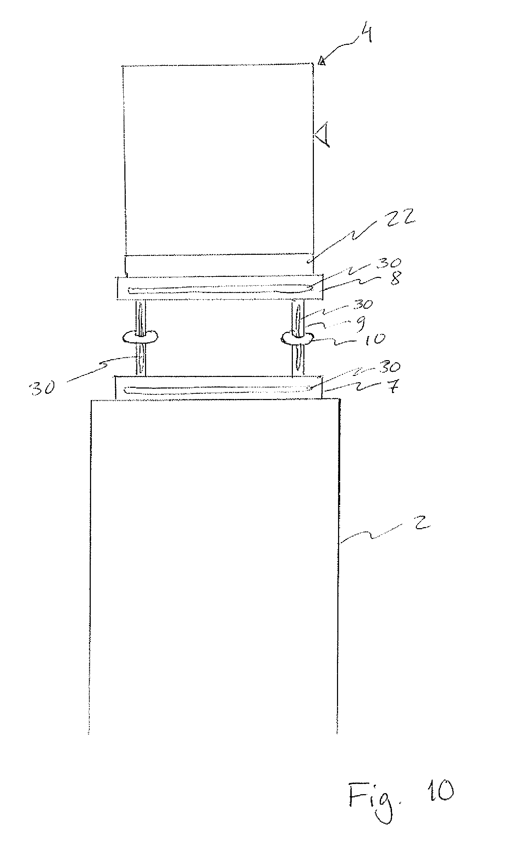

An alternative embodiment of an environmental equalising arrangement according to the invention, illustrated in figure 10, comprises a tribrach 3 that is at least partially heated. *i.e.,* one or several of the components of the tribrach 3, that is the lower or upper plates 7, 8, or the thread studs 9, are provided with an electrical resistance wire 30 embedded within the material of said components. Such an electrical resistance wire 30 is an example of a heating conduit according to the claims. By heating the air within the cover 26, the temperature of the air may be kept constant independent of the ambient temperature. Other means of heating may be microwaves, induction heating or similar depending on the material of and requirements set by the support arrangement.

In an alternative embodiment, the environmental equalising arrangement comprises a fan 24. By stirring the air using the fan 24 the temperature of the air is equalized and thus, the thread studs and the plates 7, 8 will not be affected differently due to external influence. In another alternative said fan 24 is located on the outside of said cover 26 such that air may be introduced through a valve in the cover 26.

In an alternative embodiment, a heating conduit according to the claims is in form of a fluid conduit in which a heated fluid is circulating. Suitably, one or several fluid conduits are embedded within the material of the components of the tribrach 3, such as the plates 7, 8 or the thread studs 9. The fluid in the conduits is suitably a liquid, since liquids has advantageous heat capacity properties compared to gasses.

In an alternative embodiment, the invention comprising an electrical resistance wire 30 or fluid conduits is combined with one of the embodiments of the covers 21, 26 described above. Such an embodiment will be more energy effective, and thus financially preferable.

In an alternative embodiment of the invention the environmental equalising arrangement is provided with an opening, such that the user of the arrangement is able to reach the support arrangement 3, e.g. for adjustments of the support elements 9, without disassembling the whole environmental equalising arrangement.

In still an alternative embodiment, the cover 21, 26 is provided with heating conduits in form of an electrical resistance wire or a fluid conduit. The fluid in the conduits of the cover 21, 26 is suitably a liquid, since liquids has advantageous heat capacity properties compared to gasses.

Alternatively, instead of being encapsulated in fluid conduits within the cover 21, 26, the volume inside the cover 21, 26 may be filled with a fluid, such that the tribrach 3 is surrounded by the fluid. Advantageously, the fluid inside the cover 21, 26 is stirred using a suitable stirring device. Thus, the fluid is circulated and the temperature inside the cover 21, 26 is equalized. Consequently, the components of the tribrach 3 are not affected differently depending on time dependent external influence. The fluid inside the cover 21, 26 is suitably a liquid, since liquids has advantageous heat capacity properties compared to gasses.

Still alternatively, the support 2 may be provided with a heating conduit for heating the tribrach 3, such that a temperature of the tribrach 3 is kept on substantially a constant level. Such a support 2 may be combined with either of the embodiments described above.

In still an alternative embodiment of an environmental equalizing arrangement according to the invention, the components of the tribrach 3 are produced of a material which has a low coefficient of thermal expansion, for instance invar. Such an embodiment may be combined with the embodiments described above.

## Claims

1. An environmental equalising arrangement for a support arrangement (3), which support arrangement (3) in use is adapted to support a registration device (4) and to provide an alignment opportunity for said registration device (4) in relation to a horizon, wherein said environmental equalising arrangement is provided with an environmental equalising feature such that an environmental condition within said support arrangement (3) in use is generally levelled out.

2. An environmental equalising arrangement to claim 1, wherein said environmental condition is kept generally constant.

3. An environmental equalising arrangement according to any one of claims 1 - 2, wherein said environmental equalising arrangement is a cover which in use is adapted to encapsulate said environmental equalising arrangement.

4. An environmental equalising arrangement to one of claims 1 - 3, wherein said cover is a flexible gaiter having a form which is complementary to said support arrangement.

5. An environmental equalising arrangement to one of claims 1 - 3, wherein said cover is a hard shell cover having a form which is complementary to said support arrangement.

6. An environmental equalising arrangement according to any one of claims 3 - 5, wherein said environmental equalising feature is heat insulation lined within said cover.

7. An environmental equalising arrangement according to any one of claims 3 - 6, wherein said environmental equalising feature is an air-conditioning device, said air-conditioning device comprising any one or several of the following devices: a fan, a temperature regulation device humidity regulation device.

8. An environmental equalising arrangement according to any one of claims 3 - 7 wherein said cover comprises aerating holes.

9. An environmental equalising arrangement according to claim 1, wherein said environmental equalising feature is a heating conduit embedded within a material of said environmental equalising arrangement.

10. An environmental equalising arrangement according to claim 9, wherein said heating conduit is an electrical resistance wire.

11. An environmental equalising arrangement according to any one of claims 1 - 10, wherein said support arrangement (3) is a tribrach (3).

12. An environmental equalising arrangement according to any one of claims 1 - 11, wherein said registration device (4) is a total station (4).
